Europäisches Patentamt

**European Patent Office**

**Office européen des brevets**

(19)

(11) Publication number: **0 032 602**

**A1**

(12) **EUROPEAN PATENT APPLICATION**

(21) Application number: **80201236.9**

(22) Date of filing: **23.12.80**

(51) Int. Cl.³: **C 04 B 35/66**

(30) Priority: **18.01.80 US 113417**

(43) Date of publication of application: **29.07.81**
**Bulletin 81/30**

(84) Designated Contracting States: **AT BE DE FR GB IT LU NL**

(71) Applicant: **Société Francaise des Techniques Lummus, Tour Franklin Cedex No.11, F-92081 Paris La Defense 8 (FR)**

(72) Inventor: **Felice, Frank Thomas, 369C Willowbrook Road, Norristown, Pennsylvania (US)**

(54) **Refractory composition.**

(57) A vibratable clay-free refractory mixture which will flow in the unvibrated state and knit to a coherent mass upon vibration. In addition to the alumina- and/or silica-containing base aggregate, binder and water, the mixture contains fine grain -325 mesh calcined alumina and/or silica flour. Quantities of a mid-size refractory material fraction may be included as well as a fine grain ceramic bond material such as raw kyanite. Minimum amounts of water are required to make the material flowable and vibratable which keeps down the drying time.

# REFRACTORY COMPOSITION

Background of the Invention

This invention relates generally to refractory compositions which are formulated for placement by mechanical vibration. Refractory material suitable for placement by mechanical vibrations are not new. Reference is made to prior U. S. Patents 4,056,398 and 4,069,057 which disclosed such materials.

Refractory materials for vibration forming are required to be thixotropic, i.e., upon the application of vibration, the refractory materials decrease in viscosity and become flowable and upon the removal of the vibration, the separate pieces knit together and become stiff so as to permit the removal of the molding forms without deformation. Sufficient water is required to permit the flow upon vibration and yet there must not be an excess of water which would prevent the knitting and stiffness upon the removal of the vibration. Various types of clays are usually included in plastic refractory materials, including those that are phosphate bonded, to make the materials plastic or workable and yet lend sufficient stiffness to form a shape. However, clays such as bentonite will make the material stiff and it will then require too high a degree of vibration to accomplish the vibration forming. It has, therefore, been the practice to compromise and include a limited amount of clay so as to give some degree of rigidity and still permit the vibration forming. However, this requires an increased water content to soften the material to the point that it will flow under vibration. The basic problem with these mixes is their lack of a sufficiently long shelf life. Storage, particularly in the warm months, tends to cause a reaction between the binder and the impurities in the system which stiffens the material to the point that it will not flow under vibration. Also, the increased moisture content requires increased drying time and the clay tends to expand thereby sealing the pores and also increasing the drying time.

## Summary of the Invention

The present invention relates to a refractory mixture capable of flowing upon vibration which will knit to a coherent mass when the vibration is removed and which excludes plastic clays and excess water and which has good shelf life. This is provided by the particular fine grain materials which are used and the relationship between the particle size distribution of the components. The clay-free bonding is achieved by the use of very fine particles which form a ceramic bond at intermediate temperatures and a low-to-intermediate temperature binder such as polymerized aluminum phosphate.

## Description of the Preferred Embodiments

The present invention relates to a refractory material wherein the aggregate component may be provided by a variety of alumina and silica containing materials such as tabular alumina, fused alumina, calcined bauxite (70% - 88% alumina), calcined bauxitic kaolin (60% alumina), calcined kaolin, quartz and mullite (71% alumina). The base aggregate is normally 3 mesh and finer (Tyler standard mesh sizes) down to about 10 mesh and finer. The preferred particle size is 6 mesh and finer. The base aggregate comprises between about 20% to 80% of the total mixture. Also included in the mixture is anywhere from 0 to 20% of a refractory material fraction which may have a particle size range from 30 mesh to 200 mesh but preferably in the 200 mesh range. This refractory material fraction may be selected from materials such as calcined bauxitic kaolin, calcined kaolin, calcined bauxite, calcined kyanite, fused alumina and quartz.

The components of the refractory mixture which make the composition both flowable with vibration and high in green strength after vibration is completed, in the absence of clays and high water content, are the fine mesh calcined alumina and/or silica flour. Each of these materials may be used alone or in combination with each other with the total amount being from 10 to 40% of the mixture and preferably between 18 and 30%. The term "fine mesh" is intended to include particle sizes of about minus 325 mesh. The fine mesh calcined alumina, in addition to serving as a vibratable component, also is a highly refractory component of the mixture.

A ceramic bonding component is also desirable in the refractory mixture to take the place of the bonding normally achieved by the clay. Recognized ceramic bonding components of the refractory mixture include raw kyanite, calcined alumina, fine silica blends, chromic oxide and boron oxide. All of these are used in the fine mesh sizes, about minus 325 mesh, and can be used alone or in combination with each other. The amount used is between 0 and 20% of the mixture. It is thus apparent that some of the materials that act as vibrating components can also serve as ceramic bonding components.

The preferred low-to-intermediate temperature binder for the present invention is an aluminum phosphate binder such as polymerized aluminum phosphate. This binder essentially takes the role of the clay while offering no plasticity in that it adds green strength and yet permits vibration forming. The binder tends to tie the body together during drying and essentially eliminates liquid separation that would normally take place during or after vibration in the absence of clays. The quantity of aluminum phosphate binder is from about 2 to 7 weight percent of the total mixture. Other binders such as sodium or potassium silicates, colloidial silica or organic binders such as lignosulphonates can be used.

The amount of water which is added to the mixture is only that amount required to cause the material to flow when vibrated. Water over this amount will prevent the material from knitting and will require excess drying time. If a liquid binder is used, it may not be necessary to add any excess water; whereas with a dry binder, it may be necessary to add as much as 15% water to both activate the binder and provide the necessary flow properties. In the practice of the present invention, all of the ingredients are added and then thoroughly mixed. At this point, the mixture will flow in a granular fashion just as would a mixture of damp, aggregate particles. The mixture is then poured into a mold and vibrated. The frequency of vibration which will cause the mixture to knit or form a coherent mass is from about 2000 CPS to 6000 CPS although these frequencies are by way of example and not critical limitations. As soon as the vibration has been completed, the material will have a load carrying capacity as high as 40 psi without deforming. The shaped refractory can immediately be removed from the mold and is ready for drying and firing. The knitting or cohesion produced by the vibration is reversible and can be revibrated so as to form a new shape, preferably after the original shape has been broken up. The following table lists five examples of the present invention using various ones of the permissible ingredients.

| Material | Size | Examples | | | | |
|---|---|---|---|---|---|---|
| | | 1 | 2 | 3 | 4 | 5 |
| Base Aggregate | | | | | | |
| Tabular Alumina | 6M and Finer | 60 | - | - | - | - |
| Calcined Bauxite | " | - | 60 | - | - | - |
| Calcined Bauxitic Kaolin | " | - | - | 60 | - | - |
| Calcined Kaolin | " | - | - | - | 60 | - |
| Quartz Grain | " | - | - | - | - | 60 |
| Fill | | | | | | |
| Calcined Bauxitic Kaolin | +200M | 3 | 5 | - | - | - |
| Silica Sand | - 70M | - | - | - | - | 5 |
| Vibratable Components | | | | | | |
| Calcined Alumina | -325M | 20 | 18 | 20 | 20 | - |
| Silica Flour | -325M | - | - | 10 | 9 | 24 |
| Ceramic Bond | | | | | | |
| Raw Kyanite | -325M | 6 | 6 | - | - | - |
| Binder | | | | | | |
| Aluminum Phosphate Binder | - | 6 | 6 | 5 | - | - |
| Boron Oxide | - 60M | - | - | - | - | 2 |
| Silicate Binder | - | - | - | - | 6 | 4 |
| Water | - | 5 | 5 | 5 | 5 | 5 |

In summary, it has been found, according to the present invention, that the specific combination of components in the particle size ranges and percentages recited without any clay being present will produce a vibratable composition which has high green strength with a minimum amount of water. The deformed refractory will not slump when the form is removed and the drying time is kept to a minimum by the low water content.

CLAIMS

1. A refractory composition suitable for forming by vibration which will retain its shape when vibration is removed containing in percent by weight:

    a. 20 to 80% base aggregate selected from 6 mesh and finer alumina and silica containing refractory materials and mixture thereof;

    b. 0 to 20% minus 30 mesh to plus 200 mesh refractory fill material;

    c. 0 to 20% minus 325 mesh ceramic bond material;

    d. 1 to 10% binder; and

    e. 0 to 15% water;

characterized in that the composition is clay-free and contains 10 to 40% of a vibratable component selected from minus 325 mesh silica flour and a mixture of minus 325 mesh silica flour and calcined alumina.

2. A clay-free refractory composition as recited in Claim 1 wherein said binder is an aluminum phosphate binder.

3. A clay-free refractory composition as recited in Claims 1 or 2 wherein said ceramic bond material is raw kyanite.

4. A clay-free refractory composition as recited in Claims 1 or 2 wherein said ceramic bond material is selected from the group consisting of raw kyanite, calcined alumina, fine silica, chromic oxide and boron oxide.

5. A clay-free refractory composition as recited in Claims 1 or 2 wherein said base aggregate is selected from the group consisting of tabular alumina, fused alumina, calcined bauxite, calcined bauxitic kaolin, calcined kaolin, quartz and mullite.

## DOCUMENTS CONSIDERED TO·BE RELEVANT

| Category | Citation of document with indication, where appropriate, of relevant passages | Relevant to claim |
|---|---|---|
| X | <u>EP - A2 - 0 004 509</u> (STE EUROPEENNE DES PRODUITS REFRACTAIRES)<br>* examples 1 and 2 *<br>-- | 1,4,5 |
| X | <u>GB - A - 2 024 798</u> (DRESSER INDUSTRIES)<br>* claims; page 1, lines 83 to 88 *<br>-- | 1,3,4,5 |
| X | <u>DE - A1 - 2 605 906</u> (NIPPON CRUCIBLE CO. et al.)<br>* whole document *<br>-- | 1,2,4,5 |
| | <u>FR - A1 - 2 329 612</u> (CENTRE DE RECHER-CHES METALLURGIQUES)<br>* claim 1; pages 1, 2 *<br>-- | 1,4,5 |
| | <u>AU - B - 484 640</u> (HARIMA REFRACTORY)<br>* claims *<br>-- | 1 |
| A | <u>FR - A1 - 2 395 235</u> (NL INDUSTRIES INC.)<br>---- | |

**CLASSIFICATION OF THE APPLICATION (Int. Cl.³)**

C 04 B 35/66

**TECHNICAL FIELDS SEARCHED (Int. Cl.³)**

B 22 D 41/02

C 04 B 35/00

F 27 D 1/16

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 25-02-1981 | HÖRNER |

EPO Form 1503.1 06.78